# EUROPEAN PATENT APPLICATION

(11) **EP 3 232 305 A1**
(43) Date of publication of application: **18.10.2017**
(21) Application number: 15867298.0
(22) Date of filing: 18.06.2015
(51) Int. Cl.: G06F 3/048

(54) **METHOD, APPARATUS AND DEVICE FOR MOVING ICON, AND NON-VOLATILE COMPUTER STORAGE MEDIUM**

(30) Priority: 12.12.2014 CN 201410773626
(71) Applicant: Baidu Online Network Technology (Beijing) Co., Ltd., Beijing 100085 (CN)
(72) Inventor: LIU, Junqi, Beijing 100085 (CN); LI, Kefeng, Beijing 100085 (CN)
(74) Representative: dompatent von Kreisler Selting Werner - Partnerschaft von Patent- und Rechtsanwälten mbB
(86) International application number: PCT/CN2015/081764
(87) International publication number: WO 2016/090888

(57) **Abstract**

The present disclosure provides a method and apparatus for moving an icon, an apparatus and a non-volatile computer storage medium. In embodiments of the present disclosure, an icon to be moved is determined, then the user's first operation gesture for the terminal is obtained, and an operation interface is determined according to the first operation gesture so that the icon can be moved into the operation interface. Since the icon can be directly moved into the operation interface according to the user's first operation gesture for the terminal, icon movement can be achieved without completely depending on the user's operation for the icon and without requiring the user to use the terminal to perform cross-screen operation with a larger operation amplitude. Hence, this can avoid the problem in the prior art that a longer period of time needs to be spent to complete position movement of the icon because the user has to move the icon from a position to another position only by using the terminal to perform cross-screen operation with a larger operation amplitude, and thereby improve the icon movement efficiency.

## Description

The present disclosure claims priority to the Chinese patent application No.201410773626.6 entitled "Method and Apparatus for Moving Icons" filed on the filing date December 12, 2014, the entire disclosure of which is hereby incorporated by reference in its entirety.

### Field of the Disclosure

The present disclosure relates to operation interface-processing technologies, and particularly to a method and apparatus for moving an icon, an apparatus and a non-volatile computer storage medium.

### Background of the Disclosure

As communication technologies develop, terminals integrate more and more functions so that a system function listing of the terminals includes more and more corresponding applications (APPs). Icons of some applications may be displayed on a desktop of an operating system. The user may click, on a desktop of an operating system, an icon of an application he wants to use so that the terminal calls the application. The number of applications on the terminal is generally larger, so a screen of the terminal can suffice to display all icons of all applications in one screen and icons need to be displayed in split screens. When a certain icon needs to be moved, the user may operate the certain icon displayed in the current split screen to move the icon to another position, for example, the user may drag a certain icon displayed in the current split screen to a certain position in next split screen.

However, in some cases, for example, when the screen of the terminal has a larger size, the user, by employing such icon moving manner executed completely depending on the user's operation of the icon, can move the icon from a position (namely, a position in the current split screen) to another position (namely, another position in the current split screen or another position of other split screens) only by using the terminal to perform cross-screen operation with a larger operation amplitude. As such, a longer period of time needs to be spent to complete movement of the positon of the icon, thereby causing reduction of the icon movement efficiency.

### Summary of the Disclosure

A plurality of aspects of the present disclosure provide a method and apparatus for moving an icon, an apparatus and a non-volatile computer storage medium, to improve the icon movement efficiency.

According to an aspect of the present disclosure, there is provided a method for moving an icon, comprising:
determining an icon to be moved;
obtaining the user's first operation gesture for the terminal;
determining an operation interface according to the first operation gesture;
moving the icon into the operation interface.

The above aspect and any possible implementation mode further provide an implementation mode: the obtaining the user's first operation gesture for the terminal comprises:
detect the user's first operation gesture for the terminal based on a preset designated interface.

The above aspect and any possible implementation mode further provide an implementation mode: the user's first operation gesture for the terminal comprises at least one of the following operation gestures:
the user's operation data for keys of the terminal;
the user's suspension sliding data above the terminal;
the user's contact sliding data on a display device of the terminal; and
the user's movement data for the terminal.

The above aspect and any possible implementation mode further provide an implementation mode: the determining an operation interface according to the first operation gesture comprises:
determining an operation interface corresponding to a preset gesture if the user's first operation gesture satisfies the preset gesture.

The above aspect and any possible implementation mode further provide an implementation mode: the determining an icon to be moved comprises:
detecting a working state of the terminal;
obtaining the user's second operation gesture for the terminal if the working state of the terminal is an icon-editable state; and
determining the icon to be moved according to the second operation gesture.

The above aspect and any possible implementation mode further provide an implementation mode: the moving the icon into the operation interface comprises:
moving the icon to a designated position of the operation interface.

The above aspect and any possible implementation mode further provide an implementation mode: the operation interface comprises a desktop of an operating system, a page of an application or a page of a folder.

According to another aspect of the present disclosure, there is provided an apparatus for moving an icon, comprising:
a determining unit configured to determine an icon to be moved;
an obtaining unit configured to obtain the user's first operation gesture for the terminal;
the determining unit further configured to determine an operation interface according to the first operation gesture;
a moving unit configured to move the icon into the operation interface.

The above aspect and any possible implementation mode further provide an implementation mode: the obtaining unit is specifically configured to
detect the user's first operation gesture for the terminal based on a preset designated interface.

The above aspect and any possible implementation mode further provide an implementation mode: the user's first operation gesture for the terminal obtained by the obtaining unit comprises at least one of the following operation gestures:
the user's operation data for keys of the terminal;
the user's suspension sliding data above the terminal;
the user's contact sliding data on a display device of the terminal; and
the user's movement data for the terminal.

The above aspect and any possible implementation mode further provide an implementation mode: the determining unit is specifically configured to
determine an operation interface corresponding to a preset gesture if the user's first operation gesture satisfies the preset gesture.

The above aspect and any possible implementation mode further provide an implementation mode: the determining unit is specifically configured to
detect a working state of the terminal;
obtain the user's second operation gesture for the terminal if the working state of the terminal is an icon-editable state; and
determine the icon to be moved according to the second operation gesture.

The above aspect and any possible implementation mode further provide an implementation mode: the moving unit is specifically configured to
move the icon to a designated position of the operation interface.

The above aspect and any possible implementation mode further provide an implementation mode: the operation interface determined by the determining unit comprises a desktop of an operating system, a page of an application or a page of a folder.

According to a further aspect of the present disclosure, there is provided an apparatus, comprising
one or more processors;
a memory;
one or more programs stored in the memory and configured to execute the following operations when executed by the one or more processors:
determining an icon to be moved;
obtaining the user's first operation gesture for the terminal;
determining an operation interface according to the first operation gesture;
moving the icon into the operation interface.

According to a further aspect of the present disclosure, there is provided a non-volatile computer storage medium in which one or more programs are stored, an apparatus being enabled to execute the following operations when said one or more programs are executed by the apparatus:
determining an icon to be moved;
obtaining the user's first operation gesture for the terminal;
determining an operation interface according to the first operation gesture;
moving the icon into the operation interface.

As known from the above technical solutions, in embodiments of the present disclosure, an icon to be moved is determined, then the user's first operation gesture for the terminal is obtained, and an operation interface is determined according to the first operation gesture so that the icon can be moved into the operation interface. Since the icon can be directly moved into the operation interface according to the user's first operation gesture for the terminal, icon movement can be achieved without completely depending on the user's operation for the icon and without requiring the user to use the terminal to perform cross-screen operation with a larger operation amplitude. Hence, this can avoid the problem in the prior art that a longer period of time needs to be spent to complete position movement of the icon because the user has to move the icon from a position to another position only by using the terminal to perform cross-screen operation with a larger operation amplitude, and thereby improve the icon movement efficiency.

In addition, according to the technical solutions provided by the present disclosure, since the icon can be directly moved into the operation interface according to the user's first operation gesture for the terminal, the user's experience can be effectively improved.

In addition, according to the technical solution provided by the present disclosure, since the icon can be directly moved into the operation interface according to the user's first operation gesture for the terminal, real time of icon movement can be effectively improved.

In addition, according to the technical solutions provided by the present disclosure, icon movement can be achieved without completely depending on the user's operation for the icon and without requiring the user to use the terminal to perform cross-screen operation with a larger operation amplitude. Hence, this can avoid the problem in the prior art about failure of icon movement caused by the user's misoperation in using the terminal to perform cross-screen operation with a larger operation amplitude, and thereby improve reliability of icon movement.

### Brief Description of Drawings

To describe technical solutions of embodiments of the present disclosure more clearly, figures to be used in the embodiments or in depictions regarding the prior art will be described briefly. Obviously, the figures described below are only some embodiments of the present disclosure. Those having ordinary skill in the art appreciate that other figures may be obtained from these figures without making inventive efforts.
Fig. 1 is a flow chart of a method of moving an icon according to an embodiment of the present disclosure;
Fig. 2 is a block diagram of an apparatus for moving an icon according to another embodiment of the present disclosure.

### Detailed Description of Preferred Embodiments

To make objectives, technical solutions and advantages of embodiments of the present disclosure clearer, technical solutions of embodiment of the present disclosure will be described clearly and completely with reference to figures in embodiments of the present disclosure. Obviously, embodiments described here are partial embodiments of the present disclosure, not all embodiments. All other embodiments obtained by those having ordinary skill in the art based on the embodiments of the present disclosure, without making any inventive efforts, fall within the protection scope of the present disclosure.

It needs to be appreciated that the terminals involved in the embodiments of the present disclosure comprise but are not limited to a mobile phone, a Personal Digital Assistant (PDA), a wireless handheld device, a tablet computer, a Personal Computer (PC), an MP3 player, an MP4 player, and a wearable device (e.g., a pair of smart glasses, a smart watch, or a smart bracelet).

In addition, the term "and/or" used in the text is only an association relationship depicting associated objects and represents that three relations might exist, for example, A and/or B may represents three cases, namely, A exists individually, both A and B coexist, and B exists individually. In addition, the symbol "/" in the text generally indicates associated objects before and after the symbol are in an "or" relationship.

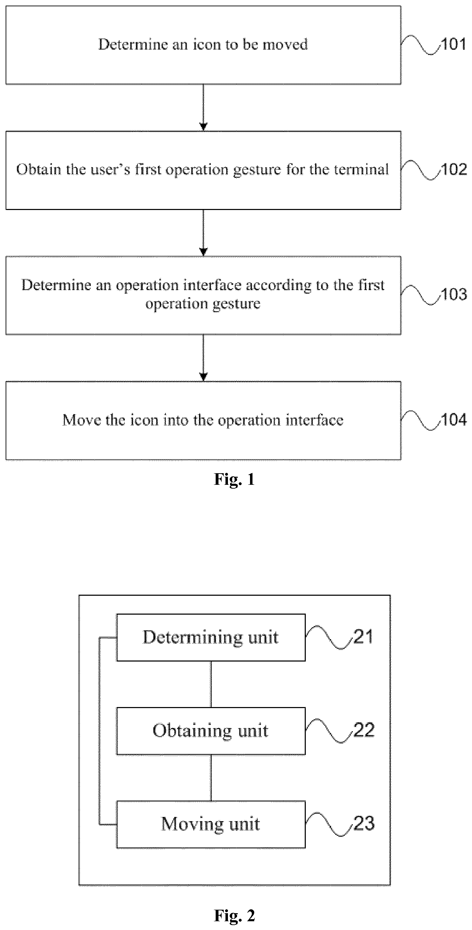

Fig. 1 is a flow chart of a flow chart of a method for moving an icon according to an embodiment of the present disclosure.
101: determining an icon to be moved.
102: obtaining the user's first operation gesture for the terminal.
103: determining an operation interface according to the first operation gesture.
104: moving the icon into the operation interface.

It needs to be appreciated that a subject for executing 101-104 may be an application located in a local terminal, or a function unit such as a plug-in or Software Development Kit (SDK) located in an application of the local terminal. This is not particularly limited in the present embodiment.

It may be understood that the application may be a native application (nativeAPP) installed on the terminal, or a browser on the terminal or its web application (webAPP). This is not particularly limited in the present embodiment.

As such, an icon to be moved is determined, the user's first operation gesture for the terminal is obtained, and an operation interface is determined according to the first operation gesture so that the icon can be moved into the operation interface. Since the icon can be directly moved into the operation interface according to the user's first operation gesture for the terminal, icon movement can be achieved without completely depending on the user's operation for the icon and without requiring the user to use the terminal to perform cross-screen operation with a larger operation amplitude. Hence, this can avoid the problem in the prior art that a longer period of time needs to be spent to complete position movement of the icon because the user has to move the icon from a position to another position only by using the terminal to perform cross-screen operation with a larger operation amplitude, and thereby improve the icon movement efficiency.

In the present disclosure, the involved icon may refer to an icon of an application such as an icon of Baidu browser, an icon of Baidu video player, an icon of a Word document or the like. These icons may be distributed on the desktop of an operating system, or may refer to icons of quick access of webpage programs such as navigation icons in a home page of Baidu browser. These icons may be distributed on a specific webpage such as a navigation webpage in the browser. This is not specifically limited in the present embodiment.

It may be understood that the application may be a native application (nativeAPP) installed on the terminal, or a web application (webAPP) of a browser on the terminal. This is not specifically limited in the present embodiment.

Optionally, in a possible implementation mode of the present embodiment, in 102, it is feasible to detect the user's first operation gesture for the terminal.

Specifically, the user's first operation gesture for the terminal may comprise but is not limited to at least one of the following operation gestures:
the user's operation data for keys of the terminal;
the user's suspension sliding data above the terminal;
the user's contact sliding data on a display device of the terminal; and
the user's movement data for the terminal.

Wherein,
The user's operation data for buttons of the terminal may refer to a key identifier of a certain key of the user's operation terminal, or a key identifier of a certain key of the user's operation terminal and an operation direction, or key identifiers of a plurality of keys of the user's operation terminal and an operation order, or key identifiers of a plurality of keys of the user's operation terminal, an operation order and an operation trajectory of each key, and the like. This is not specifically limited in the present embodiment.

The user's suspension sliding data above the terminal may refer to a suspension sliding trajectory above the terminal within an image-collecting range of an image sensor of the terminal, wherein the image sensor may be a Charge Coupled Device (CCD) sensor, or may be a Complementary Metal-Oxide Semiconductor (CMOS) sensor. This is not specifically limited in the present embodiment. The suspension sliding trajectory may comprise but is not limited to a point corresponding to a click event, a straight line or a curve of any shape formed by several stay points corresponding to several continuous sliding events.

The user's contact sliding data on a display device of the terminal may refer to the user's contact sliding trajectory on the display device of the terminal. Usually, terminals may be classified into two types according to whether the display device has a contactable property: one type is contact-type terminals, and the other type is non-contact type terminals. Specifically, specifically it is feasible to detect the user's contact sliding data on a touch screen of the contact-type terminal. The contact sliding trajectory may comprise but is not limited to a point corresponding to a click event, a straight line or a curve of any shape formed by several stay points corresponding to several continuous contact events.

The user's movement data for the terminal may refer to a movement trajectory of the terminal which is held by the user and caused to move when the user moves, for example, shake, turnover, or the like.

In a specific implementation mode, specifically it is feasible to use a sensor device to detect the user's first operation gesture for the terminal. Specifically, the sensor device may comprise but is not limited to at least one of a gravity sensor, an acceleration sensor, a pressure sensor, an infrared sensor, a distance sensor and an image sensor. This is not specifically limited in the present embodiment.

Wherein, the distance sensor may be an ultrasonic wave distance sensor, or may further be an infrared distance sensor, or may further be a laser distance sensor, or further may be a microwave distance sensor. This is not specifically limited in the present embodiment. These distance sensors all are current mature technologies. Reference may be made to relevant content in the prior art for detailed depictions, which will be not detailed any more here.

Wherein the image sensor may be a Charge Coupled Device (CCD) sensor, or a Complementary Metal-Oxide Semiconductor (CMOS) sensor. This is not specifically limited in the present embodiment.

Specifically, detecting the user's first operation gesture for the terminal may specifically be detecting a starting point and a finishing point of the user's first operation gesture for the terminal, and a trajectory from the starting point to the finishing point, or may further be detecting radian data corresponding to the trajectory.

Optionally, in a possible implementation mode of the present embodiment, in 102, specifically, it is detect the user's first operation gesture for the terminal based on a preset designated interface.

In a specific implementation procedure, the designated interface may be a desktop of an operating system of the terminal, wherein the operating system may include but is not limited to Apple's IOS operating system, Google's Android operating system or Microsoft's Windows operating system or other terminal operating systems.

The so-called desktop of operating system refers to a desktop provided by the operating system run by the terminal, is a main entrance where the user interacts with the terminal, and is also a graphical user interface of human-machine interaction. The desktop of the operating system may be set as comprising but not limited to any operation object. For example, an icon of an application is for example an icon or any icon combination in telephone, information, memo, photo, microblog, WeChat, mobile management application and various games, or for example, an icon of a system function is for example an icon or system menu set by the system.

In another specific implementation procedure, the designated interface may be any page of designated application, wherein the designated application may comprise but is not limited to any APP in the terminal or at least one preset application, for example, Baidu browser APP.

In another specific implementation procedure, the designated interface may be any page of designated application, wherein the designated application may comprise but is not limited to any APP in the terminal or at least one preset application, for example, Baidu browser APP. The designated page may comprise but is not limited to at least one preset page of the designated application, for example, a home page of Baidu browser APP.

It may be appreciated that the page involved in the present disclosure may also be called webpage or World Wide Web (Web) page, may be a web page written based on HyperText Markup Language (HTML), namely, HTML page, or may be a webpage written based on HTML and Java language, namely, Java Server Page (JSP), or may further be a webpage written in other languages. This is not specifically limited in the present embodiment.

In the present embodiment, in order to shorten a time period spent by the terminal to move an icon, namely, a time period while the terminal moves the icon from a current position in the current split screen to another position (namely, another position in the current split screen or another position of other split screens), the user may move the position of the icon using the first operation gesture, instead of completely depending on the user's operation of the icon in the prior art in a way that the user operates a certain icon displayed in the current split screen to move the icon to another position. As such, this refrains from limitations of the layout of the desktop of the operating system and can effectively improve the icon movement efficiency.

To implement the above function, optionally, in a possible implementation mode of the present embodiment, before 103, it is feasible to further preset a preset gesture for moving to a certain operation interface. Only when the obtained user's first operation gesture for the terminal satisfies the preset gesture can the operation interface corresponding to the preset gesture be determined.

Wherein, the operation interface may comprise but is not limited to a desktop of an operating system, a page of an application or a page of a folder.

Wherein, data of the preset gesture may be stored in a storage device of the terminal.

In a specific implementation procedure, the storage device of the terminal may be a slow-speed storage device, and may specifically be a hard disk of a computer system, or may further be a non-run memory of a mobile phone, namely, a physical memory, such as a Read-Only Memory (ROM) or a memory card. This is not specifically limited in the present embodiment.

In another specific implementation mode, the storage device of the terminal may further be a fast-speed storage device, may specifically be a memory of a computer system, or may further be a run type memory of a mobile phone, namely, a system memory such as Random Access Memory (RAM). This is not specifically limited in the present embodiment.

For example, a simple preset gesture such as linear shape in each direction may be specifically set. The preset gesture corresponds to a commonly-used operation interface, which may for example be the first screen of the desktop of an operating system, or may be the first screen of a webpage program of a browser.

Or, for another example, a complicated preset gesture may be specifically set, for example, "Z"-shaped data, "L"-shaped data, "pentagram"-shaped data or "hexagram"-shaped data. The preset gesture corresponds to an operation interface involving the user's personal privacy, for example, a webpage of a certain folder.

Or, for another example, specifically, it is feasible to set a convenient preset gesture, for example, leftward or rightward shake data, or leftward or rightward turnover data. The preset gesture corresponds to an operation interface of a split screen adjacent to the current screen, for example, a preceding screen or next screen of the desktop of the operating system, or a preceding screen or next screen of a webpage program of a browser.

As such, if there are other persons beside the user at this time, if the user wants to trigger the terminal to execute an icon movement operation at this time, he may use a simple preset gesture to enable the terminal to display an operation interface that does not involve personal privacy or information security, for example, an operation interface of recreation or news or the like, to present other persons from stealing or peeping at some important information. This can further effectively improve security of icon movement.

It needs to be appreciated that the present embodiment does not particularly limit the user's first operation gesture for the terminal, and that the preset gesture may vary with the first operation gesture for the icon movement.

For example, if the obtained first operation gesture is the user's operation data for keys of the terminal, the preset gesture may be a set of preset operation data of keys.

Or, for another example, if the obtained first operation gesture is the user's suspension sliding data above the terminal, the preset gesture may be trajectory data of a preset trajectory.

Or, for another example, if the obtained first operation gesture is the user's contact sliding data on a display device of the terminal, the preset gesture may be trajectory data of a preset trajectory.

Or, for another example, if the obtained first operation gesture is the user's movement data for the terminal, the preset gesture may be trajectory data of a preset trajectory.

Optionally, in a possible implementation mode of the present embodiment, in 101, a working state of the terminal may be specifically detected. The working state may comprise but is not limited to an icon-editable state or an icon-uneditable state. If the working state of the terminal is the icon-editable state, it is feasible to obtain the user's second operation gesture for the terminal, and thereby to determine the icon to be moved according to the second operation gesture.

In a specific implementation procedure, a working state of the terminal in a normal case is the icon-uneditable state. In this state, the user may click an icon of an application that he wants to use so that the terminal activates the application.

In this state, the user may further execute a designated operation manner to enable the terminal to enter an icon-editable state. For example, the user clicks any icon for a long time period, or for another example, clicks a special function key. In this state, the user may delete an icon of an application that he does not want to use any more so that the terminal uninstall the application, or the user may further move an icon of an application so that the terminal displays the icon at another position.

Wherein, the so-called click operation may be a trigger operation performed by the user using an external input device such as a mouse or keyboard to control a cursor, or it may further be a contact operation performed by the user using a contact input device such as a finger or input pen. This is not specifically limited in the present embodiment.

In another specific implementation procedure, specifically it is feasible to detect the user's second operation gesture for the terminal.

Specifically, the user's second operation gesture for the terminal may include but is not limited to at least one of the following operation gestures:
The user's suspension sliding data above the terminal; and
The user's contact sliding data on a display device of the terminal.

Reference may be specifically made to relevant depictions in the foregoing content for detailed depictions of these gestures which will not be detailed any more here.

In another specific implementation procedure, if the sliding trajectory designated by these sliding trajectory data is a point. Specifically, it is feasible to judge whether the point is located in a certain icon. If the point is located in said certain icon, it may be determined that the icon is an icon to be moved.

In another specific implementation procedure, if the sliding trajectory designated by these sliding trajectory data is a straight line. Specifically, it is feasible to judge whether the straight line passes a certain icon. If the straight line passes said certain icon, it may be determined that the icon is an icon to be moved.

In another specific implementation procedure, if the sliding trajectory designated by these sliding trajectory data is a curve. Specifically, it is feasible to judge whether an area surrounded by the curve covers a certain icon. If the area surrounded by the curve covers a major portion or all of said certain icon, it may be determined that the icon is an icon to be moved.

Optionally, in a possible implementation mode of the present embodiment, in 104, specifically it is feasible to move the icon to a designated position of the operation interface. Specifically, it is feasible to move the icon to a designated position of the operation interface according to a preset movement policy.

In a specific implementation procedure, the movement policy may be moving to a starting position of the determined operation interface. In the operation interface, positions of other icons move backward one position in turn.

In another specific implementation procedure, the movement policy may be moving to an ending position of the determined operation interface.

In another specific implementation procedure, if the determined operation interface is not the operation interface where the icon currently lies, the movement policy may be moving to a position in the operation interface corresponding to the position in the operation interface where the icon currently lies.

In another specific implementation procedure, if the determined operation interface is the operation interface where the icon currently lies, the movement policy may be moving forward or backward N positions, N being an integer larger than or equal to 1, for example, one position or two positions.

In the present embodiment, an icon to be moved is determined, the user's first operation gesture for the terminal is obtained, and an operation interface is determined according to the first operation gesture so that the icon can be moved into the operation interface. Since the icon can be directly moved into the operation interface according to the user's first operation gesture for the terminal, icon movement can be achieved without completely depending on the user's operation for the icon and without requiring the user to use the terminal to perform cross-screen operation with a larger operation amplitude. Hence, this can avoid the problem in the prior art that a longer period of time needs to be spent to complete position movement of the icon because the user has to move the icon from a position to another position only by using the terminal to perform cross-screen operation with a larger operation amplitude, and thereby improve the icon movement efficiency.

In addition, according to the technical solution provided by the present disclosure, since the icon can be directly moved into the operation interface according to the user's first operation gesture for the terminal, the user's experience can be effectively improved.

In addition, according to the technical solution provided by the present disclosure, since the icon can be directly moved into the operation interface according to the user's first operation gesture for the terminal, real time of icon movement can be effectively improved.

In addition, according to the technical solution provided by the present disclosure, icon movement can be achieved without completely depending on the user's operation for the icon and without requiring the user to use the terminal to perform cross-screen operation with a larger operation amplitude. Hence, this can avoid the problem in the prior art about failure of icon movement caused by the user's misoperation in using the terminal to perform cross-screen operation with a larger operation amplitude, and thereby improve reliability of icon movement.

As appreciated, for ease of description, the aforesaid method embodiments are all described as a combination of a series of actions, but those skilled in the art should appreciated that the present disclosure is not limited to the described order of actions because some steps may be performed in other orders or simultaneously according to the present disclosure. Secondly, those skilled in the art should appreciate the embodiments described in the description all belong to preferred embodiments, and the involved actions and modules are not necessarily requisite for the present disclosure.

In the above embodiments, different emphasis is placed on respective embodiments, and reference may be made to related depictions in other embodiments for portions not detailed in a certain embodiment.

Fig. 2 is a block diagram of an apparatus for moving an icon according to another embodiment of the present disclosure. As shown in Fig. 2, the apparatus for moving an icon according to the present embodiment may comprise a determining unit 21, an obtaining unit 22 and a moving unit 23, wherein the determining unit 21 is configured to determine an icon to be moved; the obtaining unit 22 is configured to obtain the user's first operation gesture for the terminal; the determining unit 21 is further configured to determine an operation interface according to the first operation gesture; the moving unit 23 is configured to move the icon into the operation interface.

It needs to be appreciated that the apparatus for moving an icon according to the present embodiment may be an application located in a local terminal, or a function unit such as a plug-in or Software Development Kit (SDK) located in an application of the local terminal. This is not particularly limited in the present embodiment.

It may be understood that the application may be a native application (nativeAPP) installed on the terminal, or may further be a browser on the terminal or its web application (webAPP). This is not particularly limited in the present embodiment.

Optionally, in a possible implementation mode of the present embodiment, the obtaining unit 22 is may specifically be configured to detect the user's first operation gesture for the terminal based on a preset designated interface.

Optionally, in a possible implementation mode of the present embodiment, the user's first operation gesture for the terminal obtained by the obtaining unit 22 may comprise but is not limited to at least one of the following operation gestures:
the user's operation data for keys of the terminal;
the user's suspension sliding data above the terminal;
the user's contact sliding data on a display device of the terminal; and
the user's movement data for the terminal.

Optionally, in a possible implementation mode of the present embodiment, the determining unit 21 may specifically be configured to determine an operation interface corresponding to a preset gesture if the user's first operation gesture satisfies the preset gesture.

Optionally, in a possible implementation mode of the present embodiment, determining unit 21 may specifically be configured to detect a working state of the terminal; obtain the user's second operation gesture for the terminal if the working state of the terminal is an icon-editable state; and determine the icon to be moved according to the second operation gesture.

Optionally, in a possible implementation mode of the present embodiment, the moving unit 23 may specifically be configured to move the icon to a designated position of the operation interface.

Optionally, in a possible implementation mode of the present embodiment, the operation interface determined by the determining unit 21 may comprise but is not limited to a desktop of an operating system, a page of an application or a page of a folder. This is not specifically limited in the present embodiment.

It needs to be appreciated that the method in the embodiment corresponding to Fig. 1 may be implemented by the apparatus for moving an icon according to the present embodiment. Reference may be made to relevant resources in the embodiment corresponding to Fig. 1 for detailed description, which will not be detailed any longer here.

In the present embodiment, an icon to be moved is determined, the user's first operation gesture for the terminal is obtained by the obtaining unit, and an operation interface is determined by the determining unit according to the first operation gesture so that the moving unit enables the icon to move into the operation interface. Since the icon can be directly moved into the operation interface according to the user's first operation gesture for the terminal, icon movement can be achieved without completely depending on the user's operation for the icon and without requiring the user to use the terminal to perform cross-screen operation with a larger operation amplitude. Hence, this can avoid the problem in the prior art that a longer period of time needs to be spent to complete position movement of the icon because the user has to move the icon from a position to another position only by using the terminal to perform cross-screen operation with a larger operation amplitude, and thereby improve the icon movement efficiency.

In addition, according to the technical solution provided by the present disclosure, since the icon can be directly moved into the operation interface according to the user's first operation gesture for the terminal, the user's experience can be effectively improved.

In addition, according to the technical solution provided by the present disclosure, since the icon can be directly moved into the operation interface according to the user's first operation gesture for the terminal, real time of icon movement can be effectively improved.

In addition, according to the technical solution provided by the present disclosure, icon movement can be achieved without completely depending on the user's operation for the icon and without requiring the user to use the terminal to perform cross-screen operation with a larger operation amplitude. Hence, this can avoid the problem in the prior art about failure of icon movement caused by the user's misoperation in using the terminal to perform cross-screen operation with a larger operation amplitude, and thereby improve reliability of icon movement.

Those skilled in the art can clearly understand that for purpose of convenience and brevity of depictions, reference may be made to corresponding procedures in the aforesaid method embodiments for specific operation procedures of the system, apparatus and units described above, which will not be detailed any more.

In the embodiments provided by the present disclosure, it should be understood that the revealed system, apparatus and method can be implemented in other ways. For example, the above-described embodiments for the apparatus are only exemplary, e.g., the division of the units is merely logical one, and, in reality, they can be divided in other ways upon implementation. For example, a plurality of units or components may be combined or integrated into another system, or some features may be neglected or not executed. In addition, mutual coupling or direct coupling or communicative connection as displayed or discussed may be indirect coupling or communicative connection performed via some interfaces, means or units and may be electrical, mechanical or in other forms.

The units described as separate parts may be or may not be physically separated, the parts shown as units may be or may not be physical units, i.e., they can be located in one place, or distributed in a plurality of network units. One can select some or all the units to achieve the purpose of the embodiment according to the actual needs.

Further, in the embodiments of the present disclosure, functional units can be integrated in one processing unit, or they can be separate physical presences; or two or more units can be integrated in one unit. The integrated unit described above can be implemented in the form of hardware, or they can be implemented with hardware plus software functional units.

The aforementioned integrated unit in the form of software function units may be stored in a computer readable storage medium. The aforementioned software function units are stored in a storage medium, including several instructions to instruct a computer device (a personal computer, server, or network equipment, etc.) or processor to perform some steps of the method described in the various embodiments of the present disclosure. The aforementioned storage medium includes various media that may store program codes, such as U disk, removable hard disk, read-only memory (ROM), a random access memory (RAM), magnetic disk, or an optical disk.

Finally, it is appreciated that the above embodiments are only used to illustrate the technical solutions of the present disclosure, not to limit the present disclosure; although the present disclosure is described in detail with reference to the above embodiments, those having ordinary skill in the art should understand that they still can modify technical solutions recited in the aforesaid embodiments or equivalently replace partial technical features therein; these modifications or substitutions do not make essence of corresponding technical solutions depart from the spirit and scope of technical solutions of embodiments of the present disclosure.

## Claims

1. A method for moving an icon, wherein the method comprises:
determining an icon to be moved;
obtaining the user's first operation gesture for the terminal;
determining an operation interface according to the first operation gesture;
moving the icon into the operation interface.

2. The method according to claim 1, wherein the obtaining the user's first operation gesture for the terminal comprises:
detecting the user's first operation gesture for the terminal based on a preset designated interface.

3. The method according to claim 1 or 2, wherein the user's first operation gesture for the terminal comprises at least one of the following first operation gestures:
the user's operation data for keys of the terminal;
the user's suspension sliding data above the terminal;
the user's contact sliding data on a display device of the terminal; and
the user's movement data for the terminal.

4. The method according to any one of claims 1-3, wherein the determining an operation interface according to the first operation gesture comprises:
determining an operation interface corresponding to a preset gesture if the user's first operation gesture satisfies the preset gesture.

5. The method according to any one of claims 1-4, wherein the determining an icon to be moved comprises:
detecting a working state of the terminal;
obtaining the user's second operation gesture for the terminal if the working state of the terminal is an icon-editable state; and
determining the icon to be moved according to the second operation gesture.

6. The method according to any one of claims 1-5, wherein the moving the icon into the operation interface comprises:
moving the icon to a designated position of the operation interface.

7. The method according to any one of claims 1-6, wherein the operation interface comprises a desktop of an operating system, a page of an application or a page of a folder.

8. An apparatus for moving an icon, comprising:
a determining unit configured to determine an icon to be moved;
an obtaining unit configured to obtain the user's first operation gesture for the terminal;
the determining unit further configured to determine an operation interface according to the first operation gesture;
a moving unit configured to move the icon into the operation interface.

9. The apparatus according to claim 8, wherein the obtaining unit is specifically configured to
detect the user's first operation gesture for the terminal based on a preset designated interface.

10. The apparatus according to claim 8 or 9, wherein the user's first operation gesture for the terminal obtained by the obtaining unit comprises at least one of the following first operation gestures:
the user's operation data for keys of the terminal;
the user's suspension sliding data above the terminal;
the user's contact sliding data on a display device of the terminal; and
the user's movement data for the terminal.

11. The apparatus according to any one of claims 8-10, wherein the determining unit is specifically configured to
determining an operation interface corresponding to a preset gesture if the user's first operation gesture satisfies the preset gesture.

12. The apparatus according to any one of claims 8-11, wherein the determining unit is specifically configured to
detecting a working state of the terminal;
obtaining the user's second operation gesture for the terminal if the working state of the terminal is an icon-editable state; and
determining the icon to be moved according to the second operation gesture.

13. The apparatus according to any one of claims 8-12, wherein the moving unit is specifically configured to
moving the icon to a designated position of the operation interface.

14. The apparatus according to any one of claims 8-13, wherein the operation interface determined by the determining unit comprises a desktop of an operating system, a page of an application or a page of a folder.

15. An apparatus, comprising
one or more processors;
a memory;
one or more programs stored in the memory and configured to execute the following operations when executed by the one or more processors:
determining an icon to be moved;
obtaining the user's first operation gesture for the terminal;
determining an operation interface according to the first operation gesture;
moving the icon into the operation interface.

16. A non-volatile computer storage medium in which one or more programs are stored, an apparatus being enabled to execute the following operations when said one or more programs are executed by the apparatus:
determining an icon to be moved;
obtaining the user's first operation gesture for the terminal;
determining an operation interface according to the first operation gesture;
moving the icon into the operation interface.
